# EUROPEAN PATENT APPLICATION

(11) **EP 4 644 754 A1**
(43) Date of publication of application: **05.11.2025**
(21) Application number: 25163658.5
(22) Date of filing: 13.03.2025
(51) Int. Cl.: F16L 11/04, B29C 48/00, B29C 48/151, F16L 11/16

(54) **REINFORCED HOSE**

(30) Priority: 30.04.2024 GB 202406084
(71) Applicant: JDR Cable Systems Ltd, Ely Cambridgeshire CB6 1RA (GB)
(72) Inventor: BERNACKI, Joseph, Cambridgeshire, CB6 1RA (GB); WEEKS, Robert, Cambridgeshire, CB6 1RA (GB)
(74) Representative: Cleveland Scott York

(57) **Abstract**

The invention relates to forming a collapse resistant thermoplastic hydraulic high pressure hose for use with an umbilical, where a liner is applied to a reinforcing carcass in which the liner material is controlled to protrude into recesses on the carcass to improve the engagement of the liner and carcass and prevent relative slipping. The amount of liner material which protrudes into the recesses is controlled and may be reduced at selected portions along the hose, for example to facilitate easier removal of the carcass from the liner, for example for preparation of terminations.

## Description

### Background of the Invention

This invention relates to hydraulic and other hoses used in subsea systems. In particular, the invention relates to hoses having reinforcing inner components which are keyed to a liner to resist separation and the possibility of failure of the reinforcing inner components.

Hydraulic and other types of hoses used in an underwater environment are subjected to hydrostatic pressure which increases with the depth the system is deployed at. These hoses are vulnerable to collapse due to these external hydrostatic pressures crushing the hoses.

One method to prevent hose collapse due to hydrostatic pressure is to construct these hoses with an internal reinforcing carcass to provide resistance to the external forces. These carcasses are typically constructed of a stainless steel or high carbon steel strip wound (typically in a continuous helical shape) into the carcass form. A thermoplastic liner material is then extruded onto the external part of this carcass, to retain the fluid to be transmitted. The liner covered carcass is then typically reinforced in the hoop and tensile directions with a single or multiple layers of high strength fibres or other reinforcement material applied in a helical or braided configuration along with various protective extruded layers.

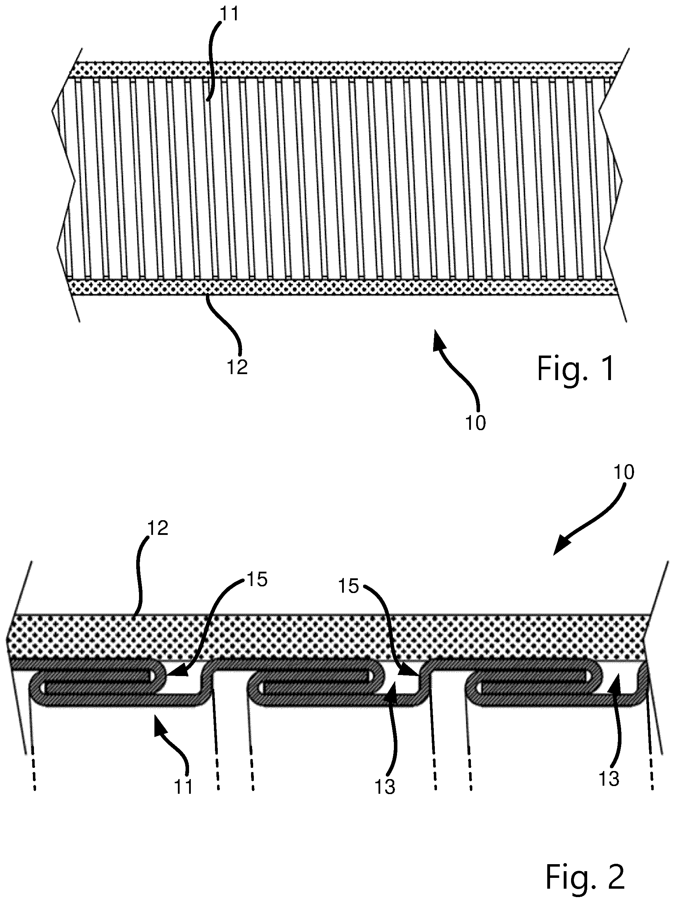

Figure 1 shows schematically a sectional view of a typical inner hose arrangement 10 of a carcass 11 and liner 12. The other elements of the hose are not shown for simplicity. Figure 2 shows a detailed sectional view of the inner hose arrangement 10.

These high collapse resistance (HCR) hoses can be used in umbilical systems integrated with other cables and hoses which are bundled together or they can be used as a single line annulus umbilical where the HCR hose is the only component.

When HCR hoses are deployed in waters deeper than a few hundred meters, there is a risk that a failure may occur which sees the carcass break under its own weight which can lead to a failure of the hose. The reinforcing carcasses are primarily for resisting external pressure compressing the liner and are not designed to be sealed and so are not pressure retaining. This function is provided by the thermoplastic fluid liner material surrounding it.

When internal pressure is applied to a hydraulic hose, this pressure causes the inner diameter of the fluid liner 12 to expand due to the volumetric expansion experienced by thermoplastic products. As the steel carcass 11 is not a pressure retaining element, the pressure on both sides of the carcass is similar and so it is not subjected to the same expansion. As a result, under pressure the radial dimension of the liner may increase relative to that of the carcass causing the liner to move away from the carcass resulting in a loss of friction between the carcass 11 and the hose liner 12. As a result, particularly when the hose is suspended vertically, the weight of the carcass may no longer be supported by the tensile structural elements of the hose via the liner. Under these circumstances, the self-weight of the carcass must be supported by the carcass itself and, if the length of the hose is sufficient, the self-weight may exceed the ultimate tensile strength of the carcass and cause the carcass to unwind or break completely.

### Summary of the Invention

Therefore according to the present invention there is provided a hose for use in a subsea umbilical comprising: a generally tubular reinforcing carcass provided with one or more recesses provided in an outer surface of the carcass; and a generally tubular liner formed of a thermoplastic liner material provided along and around the outer surface of at least part of the carcass, wherein the liner includes one or more high-infill portions, each having a plurality of protrusions of liner material extending radially from the inner surface of the liner into respective recesses. The liner may include one or more low-infill portions where the material of the liner does not substantially protrude into the recesses.

By providing a hose with a liner which has a high infill section, an improved engagement between the liner and the carcass can be provided to improve the utility and strength of the hose, particularly in deep water applications where the hose may extend vertically over a great length.

By having sections which are not provided with high infill, the hose can be processed more easily where it is necessary to remove the carcass, such as for termination or jointing.

The liner may have one low-infill portion at each end of the hose with at least one high-infill portion provided between said low-infill portions at each end of the hose. This allows the hose to be subsequently terminated at intermediate positions and also provides the other advantages of the low-infill regions at intermediate positions.

The liner may include several spaced apart high-infill portions arranged between said low-infill portions at each end of the hose. This provides further flexibility in where the hose can be processed to avoid limiting such processing to a limited number of positions. Even with a number of low-infill regions, the high infill regions still provides the benefit of improved engagement between the carcass and the rest of the body, such as an umbilical, supporting the hose.

The one or more recesses may be formed as one of a number of consecutive annular grooves or one or more spiral grooves, formed on the surface of the carcass.

The invention may also provide an umbilical including at least one hose as described above. Such an umbilical may include one or more additional components, such as more hoses according to the invention or other elements providing other functions such as reinforcement and structural security.

The present invention also provides a method of manufacturing a hose having a tubular reinforcing carcass provided with a plurality of recesses provided on an outer surface of the carcass and a tubular liner formed of a thermoplastic liner material around the outer surface of at least part of carcass, the method comprising: passing a carcass provided with a plurality of surface recesses through an extruder; applying a thermoplastic liner material to the surface of the carcass to form a liner around the carcass; selectively controlling the pressure differential between the inside and the outside of the liner to control the level of infill of the liner material into the recesses once the liner material has set.

The method is able to provide a hose with the advantages as set out above.

The level of infill of the liner material is controlled by adjusting the pressure differential between the inside and the outside of the liner. This allows variable pressure to be provided across the liner to vary the driving force causing the liner material to move into the recesses on the carcass.

The pressure differential is preferably variable to control the amount of infill to allow it to be varied between a maximum level and a minimal level but also to allow intermediate levels of infill which may provide a progressive transition, where required.

The method may further provide cooling of the liner material after it is applied to the carcass wherein the cooling is controlled to control the flow of liner material into the recesses.

The rate of cooling may be controlled by adjusting the rate of cooling of the liner material. The rate of cooling may also be controlled by adjusting the position where the cooling is applied relative to the position where the thermoplastic liner material is applied. This allows the rate of cooling of the different regions of the liner to be controlled, particularly the inner and outer parts which helps to adjust the amount of liner material forced into the recess on the carcass and hence the level of infill.

The present invention also provides a hose extruder system comprising: an extruder head arranged to extrude a tubular liner onto a carcass from a liner material reservoir, the extruder head having a central channel through which the carcass is passed prior to thermoplastic liner material being applied to the surface of the carcass to form a liner around the carcass; a vacuum head having a vacuum chamber and a seal member at one end and attached at the other end to the extruder to connect the central channel with the vacuum chamber; a plenum being formed by: said central channel; the vacuum chamber; the seal and in use the liner material between the liner material reservoir and the carcass; and a controllable vacuum means attached to the vacuum head for reducing the pressure within the plenum and controllable to vary the pressure in the plenum as the carcass is passed through the central channel as the hose is processed by the hose extruder system; and a cooling arrangement arranged to provide variable cooling to the liner material after extrusion onto the carcass to control the rate of cooling of the liner material.

The vacuum means is controllable to vary the pressure in the plenum as the hose is processed by the hose extruder system.

The cooling arrangement may be adjustable to vary the rate of cooling at a given position relative to the extruder. It may also be adjustable to control the position where the cooling is applied relative to the extruder head. In this way, the cooling profile of the liner can be controlled and with that the level of infill. The cooling profile, i.e. the relative cooling between the inner and outer parts of the liner and also along the length of the hose from the extruder, is therefore controlled between where the liner emerges from the extruder and a position where the liner is sufficiently solidified to prevent further flow or change of shape which might allow modification of the amount of material in the recesses.

In the inner hose arrangement 10 configuration shown in Figures 1 and 2, the liner has a generally consistent diameter similar to the external diameter of the carcass, such that there is relatively little infill of the liner in the spaces 13 between the elements of the carcass. By modifying the process by which the liner is extruded onto the carcass according to the invention, the liner material enters into the spaces 13 to provide a high infill configuration. The hose comprising the enhanced infill and the method of extrusion of the thermoplastic liner material onto the metallic carcass to provide this help to secure the carcass and the liner from relative axial movement even if the liner expands radially under pressure. This provides a more reliable engagement between the carcass and the liner to prevent the carcass from becoming separated from the liner and consequently unsupported by the hose tensile structural elements. Furthermore, this level of infill can be varied at different points along the hose. This is helpful in making the hose more workable, for example for terminating the hose at the ends. Where a termination is formed, the carcass may need to be worked on or partially removed in the region of the end of the hose and high infill can be undesirable as it may obstruct such removal.

This variation in infill provides a liner which is capable of suitably supporting a metallic carcass in an HCR hose when vertically deployed in all modes of operation. Low infill regions provide areas where carcass extraction may be achieved for the purpose of end fitting termination. This is beneficial because in order to install an end fitting, the carcass may need to be partially removed and cut down to interface with the fitting.

### Brief Description of the Drawings

The present invention will now be described in detail by reference to the attached drawings in which:
Figure 1 shows schematically a portion of a hose component with low infill;
Figure 2 shows a more detailed view of portion of Figure 1;
Figure 3 shows schematically a portion of a hose component with greater infill;
Figure 4 shows a more detailed view of portion of Figure 3;
Figure 5 shows schematically a device for extruding a liner onto the carcass of a hose;
Figure 6 shows schematically the cooling stages after the extruder stage; and
Figure 7 shows a cross section through the cooling hose.

### Detailed Description

Umbilicals typically refer to cables or pipeline systems used in offshore industries such as oil and gas production. They are typically used to connect subsea equipment, such as wellheads or manifold systems, to production platforms or vessels on the ocean surface. These umbilicals serve several purposes, including transmitting power, control signals, hydraulic fluid, and sometimes chemicals between the surface and the subsea installations. They need to withstand extreme conditions due to their operation in deep water, including high pressures, low temperatures, etc. References to umbilical in this document are intended to cover any kind of umbilical or hose-like structure with an internal hose member, particularly high collapse resistance (HCR) hoses.

Umbilicals and other hoses used for deep water operation are typically exposed to extremely high external pressure which may significantly exceed the internal pressure in certain conditions, putting considerable radial loads on the hose members within the umbilicals. As described above, the hose members are therefore formed using a liner formed on a carcass. The liner provides the liquid-tight enclosure for retaining the contents of the hose. The carcass provides a structural support to resist the crushing of the hose by the external pressure, but is not intended to be for containing fluid within the hose or retaining pressure.

The liner is typically formed from thermoplastic material such as Nylon 11, MDPE, XLPE, PVDF and others. The carcass is typically made of steel which provides good strength and resistance to corrosion against the contents of the hose. The liner and carcass together form the main elements of the fluid retaining line (HCR hose) prior to incorporating it into the rest of the umbilical. The umbilical may be constructed to only contain the HCR hose but might include one or more other elements such as: other hoses; cables for carrying power, data cables optical fibres etc. However, the presence of these elements do not particularly affect the function of the HCR hose.

As noted above, Figures 1 and 2 shows an HCR hose with low infill. Infill being the protrusion of the liner material into the space 13 between the elements of the carcass 11 and the outermost diameter of the carcass. In this example, the carcass is formed from an elongate element wound in a spiral configuration with each axial edge engaging the adjacent edge, as shown in section in figures 1 and 2. This forms a carcass structure which provides good radial crush resistance whilst still providing a degree of flexibility in the hose. As can be seen in Figure 2, where the adjacent carcass elements engage each other, they leave an annular spiral recess between each other, shown as recess or space 13. It will be appreciated that different carcass configurations are possible and the continuous annular recess may be configured in different ways such as simple annular recesses between adjacent carcass elements, or with discreet recesses in the surface of the carcass and so on. The key feature of these recesses is to provide a space into which the liner material can be inserted or infilled to form a keyed engagement with the carcass to provided improved resistance to axial sliding of the carcass relative to the liner.

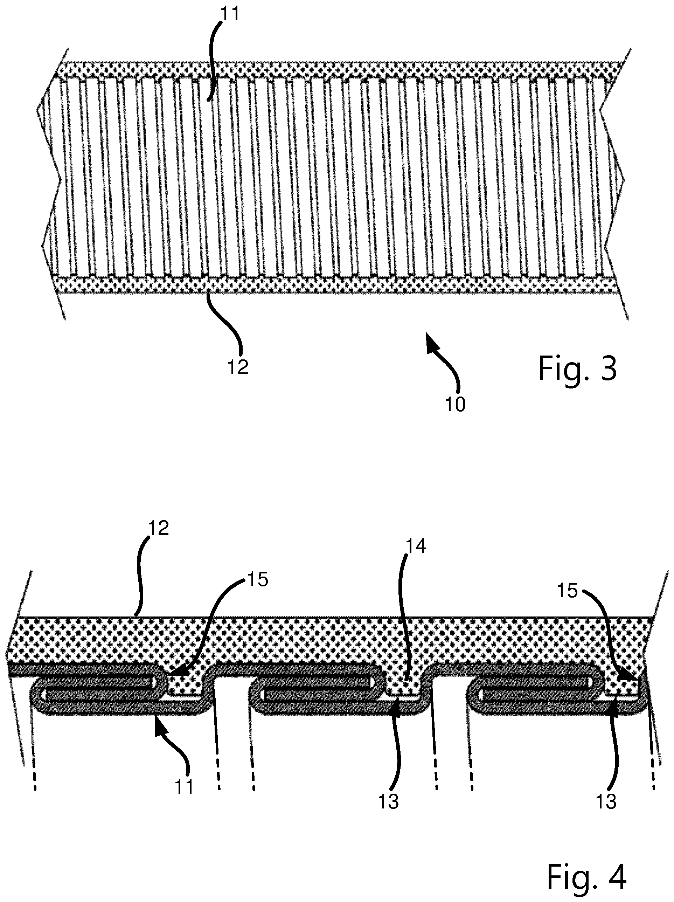

Figures 3 and 4 show equivalent views of Figures 1 and 2 with a much higher infill. Figure 4 shows the infill material 14 partially filling the space 13. With the low-infill arrangement of Figures 1 and 2 the tension on the carcass, when the umbilical is suspended vertically, is largely dependent on the frictional engagement between the outer edge surface of the carcass and the inner surface of the liner 12 to support the weight of the carcass. As the internal pressure of the hose increases (particularly higher up the hose where the external hydrostatic pressure will be lower), this can cause the liner to radially expand and move away from the carcass, reducing the frictional force supporting the carcass. If there is little frictional engagement between the carcass and the liner, the weight of the carcass must be supported by the portion of the carcass above rather than via the liner to the umbilical strength member. By increasing the infill as shown in Figure 4, the support of the carcass is much greater due to the interleaved "fingers" of infill material 14 engaging the end faces 15 of the carcass elements.

The liner is normally extruded onto the carcass and so naturally forms a relatively simple structure such as that shown in Figure 2. However, using the method below, the liner can be manipulated to form the infill material portions projecting into the spaces 13.

With this method, the infill portions can be formed along the length of the hose spreading the weight of the carcass out along the length of the hose to prevent slipping relative to the liner. However, if the infill is included along the entire length of the hose, it means there is a strong interface between the liner and carcass, including at positions along the hose where this may be undesirable. This high infill configuration makes the removal of the carcass from the liner difficult.

The ends of umbilicals are terminated for connection to equipment such as the subsea equipment and that at the surface facility. The termination process generally involves securing the umbilical to specific connection points using various methods. The termination usually involves connecting the elements of the umbilical to interface elements or directly to the equipment. These terminations, particularly the deep sea ends are subject to enormous environmental challenges in addition to those mentioned above in relation to the umbilical itself. The end of the umbilical needs to be reliably secured to the termination assembly which itself must be securely attached to the equipment. Each of the elements within the umbilical also needs to be terminated in some way to allow for connection to the equipment, ensuring liquids are contained. This makes the process of forming the termination challenging.

The forming of the termination for the hose typically requires a portion of the carcass to be removed from the liner without affecting the integrity of the liner. With the high infill arrangement of Figure 4, the removal of the carcass is made much more difficult. It is therefore preferable that the region of the hose around the termination has a low infill of the liner to make removal of the carcass much easier.

To facilitate this, the amount of infill can be varied along the length of the hose so that some portions have low infill, such as at or near the ends and the rest has a high infill to ensure good engagement of the carcass and liner along the rest of the hose. The hose may include intermediate portions between the ends that also have low infill. This can be useful if the hose needs modification later or is repurposed requiring a termination to be formed at an intermediate position. For example, the hose may be formed with an initial portion of low infill followed by a section of higher infill then another section of low infill and a further section of high infill and so on until the far end of the hose where a low infill section would normally be provided. This allows the hose to be terminated at any one of the multiple intermediate portions with low infill along the length of the hose. For example, the low infill portions may be spaced at 400m intervals with 50m sections of low infill hose, although these values are merely exemplary. The spacing may be any amount and not necessarily equi-spaced. The spacing is likely to be dictated by current and future anticipated uses.

The strong engagement of the carcass with the liner with the high infill is useful for providing good engagement but it can also be useful to have less rigid engagement in other places. For example, when re-terminating the hose into a fitting in the event of a cut back operation, it is necessary to remove the carcass from the liner for a short length in order to facilitate the re-termination. It may therefore be desirable to have one or more portions of low infill to provide regions where there is less engagement. In addition the low infill sections are more flexible allowing easier flexing of the hose tails.

An umbilical may have parts in different configurations such as being vertically suspended or laid horizontally on the seabed. In the latter case, the carcass is not being suspended axially and so the need for the higher infill is reduced and so portions of the umbilical that are to be laid horizontally may be formed without high infill whilst the other sections may be provided with the higher infill, such as for vertically arranged portions.

The provision of intermediate portions with low infill should not significantly impact the improved carcass weight bearing function as the sections of carcass either side of the low infill portion will be able to transfer the weight of the carcass to the load bearing portions of the umbilical via the liner which should prevent or limit any slippage in the portions where there is low infill.

The transition of the amount of infill between the low infill and the high infill portions may be immediate or spread out with the amount of infill being varied progressively along a length of the hose.

In order to form the variable infill layer, the thermoplastic liner is extruded onto the carcass by changing the amount of infill as the liner is extruded onto the carcass and allowed to set. This can be performed by switching between two extrusion methods. The first low infill method lays the molten material on the carcass before it is cooled slowly. The second method utilises a pressure differential to force the material onto the carcass allowing it to penetrate the spaces 13 between the castellations on the steel carcass before it is cooled quickly to set its shape and prevent further change of shape.

Cooling baths or other means, such as air cooling, may be used to control the rate of cooling of the extruded thermoplastic material once it is in contact with the carcass. The speed and intensity of the cooling application is controlled to adjust the cooling rate and in turn control the level of infill that is achieved.

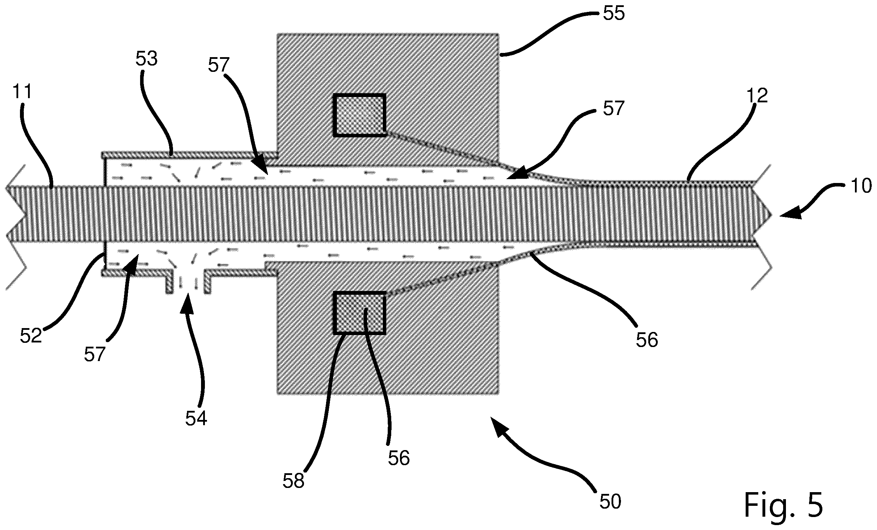

Figure 5 shows a schematic diagram of an extruder 50 for applying liner material 56 to a carcass 11. The extruder 50 includes an extruder head 55 which receives molten liner material 56 which is extruded into an annular tube form to be applied to carcass 11. The extruder 50 also includes a vacuum head 53 which is constructed around the inlet to the extruder via which the carcass is provided to the extruder. The carcass passes into the vacuum head 53 via a seal 52 which provides a largely airtight seal between the atmosphere and the vacuum head 53. The seal and the interior of the vacuum head enclose one end of a low pressure plenum 57. The plenum extends through the extruder 50 and is enclosed at the opposite end by the liner material 56, extending from the liner material reservoir 58 of the extruder to where the liner meets the carcass as it is laid onto the carcass. The plenum therefore forms a largely enclosed space separate from the external atmosphere so that it can be maintained at a lower pressure relative to the atmospheric pressure outside the extruder. A vacuum line 54 is connected to the plenum 57 to maintain the reduced pressure within.

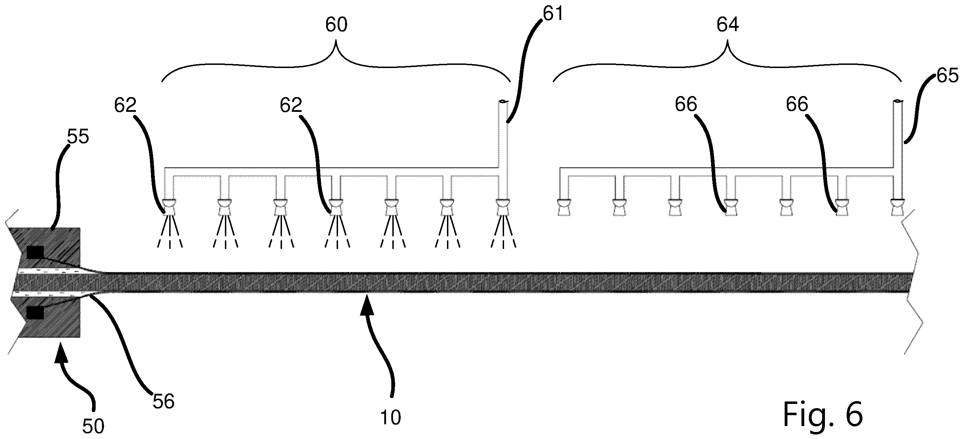

Again cooling baths or other cooling means such that shown in Figure 6 may be used to control the rate of cooling of liner material once it is in contact with the carcass. By controlling the pressure differential between the internal/external regions of the liner and the speed of cooling, it is possible to control the amount of material infill in the carcass.

Figure 6 shows the cooling arrangement down the production line from the extruder 50. A series of cooling stages 60,64 are provided for cooling the molten liner material 56. The cooling stages include a series of water jets 62, 66 which are supplied with cooling water by feeds 61, 65, which is directed onto the material after it has exited the extruder. The precise arrangement of the jets is not shown but they may be laid out in a number of ways including directing cooling flow from various directs to evenly cool the molten liner material 56. These jets are provided from the exit of the extruder head along the production line.

The rate of cooling of the liner material 56 can be controlled, for example by increasing or decreasing the number of water jets applying cooling water to the extruded carcass or the flow from each of them, and by controlling the temperature of the cooling water. The two stages 60, 64 shown in Figure 6 are arranged sequentially along the production line. This allows the cooling process to be applied at different positions relative to leaving the extruder. By applying cooling water using the first stage 60, arranged at a reduced distance from the extruder head, the rate of cooling of the liner material is increased. This encourages accelerated circumferential solidification shrinkage of the liner material which when, combined with the pressure differential from the vacuum, encourages the liner material to set in a high infill configuration.

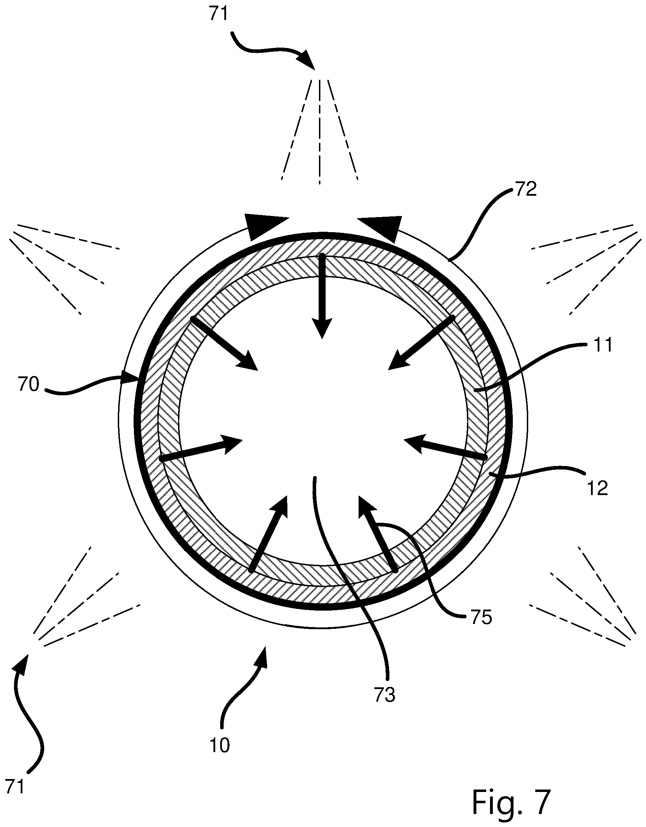

Figure 7 shows the cooling process in more detail. The jets 62, 66 provide cooling water 71 to the liner 12 whilst it is still semi-molten. As the liner is cooled, solidification shrinkage occurs on at least the outer skin 70, where the cooling effect causes contraction of the semi-molten liner material 56. As the outer skin contracts, the outer circumference tends to reduce creating a force (shown as 72 in Figure 7) which produces a radial force (shown by lines 75) forcing the still molten inner material within to be forced radially inwardly towards and into the spaces 13 in the carcass 11, increasing the amount of infill. The continued cooling then allows the rest of the molten liner material to cool and become more solid retaining the infill.

By increasing the distance between the extruder head and the application of the cooling water, either by switching off or redirecting some jets closer to the extruder head, or moving their position altogether, the cooling rate can be reduced. Also, the initial cooling may be performed by air cooling only, which tends to provide a slower cooling rate. For example the first stage cooling 60 may be turned off and the second stage cooling 64 left on, to delay the cooling until further away from the extruder. The stage 1 cooling 60 may be reduced by replaced with air cooling as noted above, reducing the flow or cutting it off completely.

This delaying or reducing of the cooling reduces the circumferential solidification shrinkage of the liner material. This allows the molten material to cool more slowly with the heat being removed without the contraction mentioned above. As a result the molten liner material is not forced into the spaces 13 and the level of infill is significantly reduced. In this way, the infill can be controlled between a high level of infill and a low level by selectively controlling the cooling process.

In addition to the above process, the vacuum pressure in the plenum causes a reduced pressure in the inner space 73 within the carcass 11 compared to the exterior of the liner 12. This differential produces an additional force to push the still soft molten liner material into the spaces and aiding the production of a high infill level. Conversely, the vacuum can be disabled or relieved so that the pressure in the plenum rises to a pressure at or near the external pressure. This removes the force on the liner material reducing the tendency for it to be forced into the spaces.

The combination of the effect of controlling the cooling and vacuum level allows the level of infill to be controlled to a desired level without needing to stop the production line or reconfigure the production line set up.

Although the cooling fluid is indicated as water, other cooling liquids or gases may be used with similar effects.

Both the extrusion methods described above, i.e. low infill and high infill, are valid for use in hose production. The low infill extrusion method does not provide a high level of retention on the hose carcass and is shown in FIG 2. This configuration allows for the carcass to be removed from the liner, for example if required for the installation of a termination fitting.

In the arrangements shown in Figures 2 and 4, the relative levels of infill ranging from low or no infill in Figure 2 to high infill in Figure 4. It should be understood that the amount of infill can vary between no infill at all to high infill which may completely fill the space 13 in any recesses in the carcass. The effect in resisting relative axial movement as the hose expands with pressure will vary as the amount of infill increases. At a position where termination of the hose is likely, a low infill is preferable although this may not necessarily exclude a small amount of infill which may occur due to natural flow of the softened liner material as it is extruded on to the carcass. Ideally, for a "low infill" region, the amount of liner material within the recess should be less than 40% and preferably less than 25%. With low levels of infill, the liner material is less likely to snag on the edges 15 of the spaces, which is likely to increase resistance to axial movement, also making removal of the carcass easier.

Equally, a high infill level does not necessarily require the space 13 to be completely filled to achieve a sufficient increase in the resistance to relative axial movement. Ideally at least 60% of the recess will be filled but this is dependent on the depth of the space 13 on the carcass and the amount of liner inner diameter expansion expected at the hose design working pressure.

## Claims

1. A hose (10) for use in a subsea umbilical **characterised by** comprising:
a generally tubular reinforcing carcass (11) provided with one or more recesses (13) provided in an outer surface of the carcass; and
a generally tubular liner (12) formed of a thermoplastic liner material provided around the outer surface of at least part of the length of the carcass, wherein the liner includes one or more high-infill portions (14), each having a plurality of protrusions of liner material extending radially from the inner surface of the liner into respective recesses (13), wherein the liner includes one or more low-infill portions where the material of the liner does not substantially protrude into the recesses.

2. A hose according to claim 1 wherein the liner includes one low-infill portion at each end of the hose with at least one high-infill portion provided between said low-infill portions at each end of the hose.

3. A hose according to claim 2 wherein the liner includes a plurality of spaced apart high-infill portions (14) arranged between said low-infill portions at each end of the hose.

4. A hose according to any one of the preceding claims wherein said one or more recesses are formed as one of annular or spiral grooves inset on the surface of the carcass.

5. An umbilical including at least one hose according to any one of the preceding claims.

6. An umbilical according to claim 5 further comprising one or more additional components.

7. A method of manufacturing a hose (10) having a tubular reinforcing carcass (11) provided with a plurality of recesses (13) provided on an outer surface of the carcass and a tubular liner (12) formed of a thermoplastic liner material around the outer surface of at least part of carcass, the method **characterised by** comprising:
passing a carcass provided with a plurality of surface recesses through an extruder (50);
applying a thermoplastic liner material to the surface of the carcass to form a liner (12) around the carcass;
selectively controlling the pressure differential between the inside and the outside of the liner to control the level of infill of the liner material into the recesses once the liner material has set.

8. A method according to claim 7 wherein the pressure differential is variable to control the amount of infill.

9. A method according to claims 7 or 8 further comprising cooling the liner material after it is applied to the carcass wherein the cooling is controlled to control the flow of liner material into the recesses.

10. A method according to claim 9 wherein the rate of cooling is controlled by adjusting at least one of: the rate of cooling and the position where the cooling is applied relative to the position where the thermoplastic liner material is applied.

11. A hose extruder system **characterised by** comprising:
an extruder head (55) arranged to extrude a tubular liner (12) onto a carcass from a liner material reservoir (58), the extruder head having a central channel through which the carcass (11) is passed prior to thermoplastic liner material (56) being applied to the surface of the carcass to form a liner (12) around the carcass;
a vacuum head (53) having a vacuum chamber and a seal member (52) at one end and attached at the other end to the extruder to connect the central channel with the vacuum chamber;
a plenum (57) being formed by: said central channel; the vacuum chamber; the seal (52) and in use the liner material (56) between the liner material reservoir (58) and the carcass (11); and
a controllable vacuum means attached to the vacuum head (53) for reducing the pressure within the plenum (57) and controllable to vary the pressure in the plenum as the carcass is passed through the central channel as the hose is processed by the hose extruder system; and
a cooling arrangement (60, 64) arranged to provide variable cooling to the liner material after extrusion onto the carcass to control the rate of cooling of the liner material.

12. A hose extruder system according to claim 11, wherein the cooling arrangement is adjustable to vary at least one of: the rate of cooling; and the position where the cooling is applied relative to the extruder head.

## Amended claims

### Amended claims in accordance with Rule 137(2) EPC.

1. A hose (10) for use in a subsea umbilical comprising:
a generally tubular reinforcing carcass (11) provided with a plurality of recesses (13) provided in an outer surface of the carcass; and
a generally tubular liner (12) formed of a thermoplastic liner material provided around the outer surface of at least part of the length of the carcass, **characterised in that** the liner includes:
one or more high-infill portions (14), each high-infill portion having a plurality of protrusions of liner material extending radially from the inner surface of the liner into respective recesses (13) of said carcass; and
one or more low-infill portions, where the material of the liner does not substantially protrude into recesses of the carcass around which each low-infill portion is provided.

2. A hose according to claim 1 wherein the liner includes one low-infill portion at each end of the hose with at least one high-infill portion provided between said low-infill portions at each end of the hose.

3. A hose according to claim 2 wherein the liner includes a plurality of spaced apart high-infill portions (14) arranged between said low-infill portions at each end of the hose.

4. A hose according to any one of the preceding claims wherein said one or more recesses are formed as one of annular or spiral grooves inset on the surface of the carcass.

5. An umbilical including at least one hose according to any one of the preceding claims.

6. An umbilical according to claim 5 further comprising one or more additional components.

7. A method of manufacturing a hose (10) having a tubular reinforcing carcass (11) provided with a plurality of recesses (13) provided on an outer surface of the carcass and a tubular liner (12) formed of a thermoplastic liner material around the outer surface of at least part of carcass, the method comprising:
passing a carcass provided with a plurality of surface recesses through an extruder (50); and
applying a thermoplastic liner material to the surface of the carcass to form a liner (12) around the carcass, **characterised by** the method further comprising:
selectively controlling the pressure differential between the inside and the outside of the liner to control the level of infill of the liner material into the recesses once the liner material has set.

8. A method according to claim 7 wherein the pressure differential is variable to control the amount of infill.

9. A method according to claims 7 or 8 further comprising cooling the liner material after it is applied to the carcass wherein the cooling is controlled to control the flow of liner material into the recesses.

10. A method according to claim 9 wherein the rate of cooling is controlled by adjusting at least one of: the rate of cooling and the position where the cooling is applied relative to the position where the thermoplastic liner material is applied.

11. A hose extruder system comprising:
an extruder head (55) arranged to extrude a tubular liner (12) onto a carcass from a liner material reservoir (58), the extruder head having a central channel through which the carcass (11) is passed prior to thermoplastic liner material (56) being applied to the surface of the carcass to form a liner (12) around the carcass; and
a vacuum head (53) having a vacuum chamber and a seal member (52) at one end and attached at the other end to the extruder to connect the central channel with the vacuum chamber; **characterised by** further comprising:
a plenum (57) being formed by: said central channel; the vacuum chamber; the seal (52) and in use the liner material (56) between the liner material reservoir (58) and the carcass (11); and
a controllable vacuum means attached to the vacuum head (53) for reducing the pressure within the plenum (57) and controllable to vary the pressure in the plenum as the carcass is passed through the central channel as the hose is processed by the hose extruder system; and
a cooling arrangement (60, 64) arranged to provide variable cooling to the liner material after extrusion onto the carcass to control the rate of cooling of the liner material.

12. A hose extruder system according to claim 11, wherein the cooling arrangement is adjustable to vary at least one of: the rate of cooling; and the position where the cooling is applied relative to the extruder head.
